# EUROPÄISCHE PATENTANMELDUNG

(11) **EP 4 386 240 A1**
(43) Veröffentlichungstag der Anmeldung: **19.06.2024**
(21) Anmeldenummer: 23198184.6
(22) Anmeldetag: 19.09.2023
(51) Int. Cl.: F16K 15/03, F16K 27/02

(54) **RÜCKSCHLAGKLAPPE PTFE**

(30) Priorität: 14.12.2022 DE 102022133338
(71) Anmelder: SISTO Armaturen S.A., 6468 Echternach (LU)
(72) Erfinder: LOEW, Pascal, 6468 Echternach (LU); HACKENBERGER, Bernd, 6468 Echternach (LU)
(74) Vertreter: Busch, Tobias

(57) **Zusammenfassung**

Die Erfindung betrifft eine Rückschlagarmatur (1) mit einem Absperrkörper (2), der mit einem Gehäuseteil (3) in Verbindung steht. Zwischen dem Absperrkörper (2) und dem Gehäuseteil (3) ist ein verformbarer Bereich (4) zum Schwenken zwischen einer geschlossenen und einer geöffneten Stellung ausgebildet, wobei der Bereich (4) aus einem Thermoplasten ausgebildet ist.

## Beschreibung

Die Erfindung betrifft eine Rückschlagarmatur mit einem Absperrkörper, der mit einem Gehäuseteil in Verbindung steht.

Eine Rückschlagarmatur ist ein Bauteil, welches die Strömung eines Fluids in nur einer Richtung zulässt. Dieses Bauteil kann als Rückschlagventil oder als Rückschlagklappe ausgeführt sein.

Bei federbelasteten Rückschlagarmaturen wird das Schließelement in einer Richtung durch die Feder geschlossen, in der anderen Richtung dagegen vom Druck des strömenden Fluids freigegeben. Hierbei wird entweder eine Kugel, ein Kegel, eine Klappe oder eine Membran in den jeweiligen Dichtungssitz gedrückt. Steht in der Durchlassrichtung ein Druck an, der die Rückstellkraft der Feder überwinden kann, wird das dichtende Element vom Sitz abgehoben und der Durchfluss ist frei.

Bei Rückschlagarmaturen ohne Feder wird das Dichtelement entweder durch die Schwerkraft oder den Fließdruck des strömenden Fluids in den Dichtungssitz gedrückt.

Eine Rückschlagklappe mit Flanschen zeichnet sich beispielsweise durch einen geringen Durchflusswiderstand und eine kurze Beruhigungsstrecke aus. Durch eine vorgespannte Klappenscheibe und durch einen kurzen Schließweg können Druckstöße vermieden werden. Zudem ist eine Rückschlagklappe oft wartungsfrei.

Die EP 2 476 937 B1 offenbart eine Rückschlagklappe mit einem eine Durchflussöffnung aufweisenden Gehäuse und mit einer zum Schließen oder Öffnen der Durchflussöffnung vorgesehenen Klappe, die im Gehäuse über ihre durchgehende Klappenwelle zwischen einer Schließ- und wenigstens einer Offenlage schwenkbar gelagert ist. Die Mantelfläche der Klappenwelle weist eine nutförmige Ausnehmung zur Ausbildung eines Strömungskanals zwischen der Klappenvorderseite und -rückseite in wenigstens einer Offenlage der Klappe auf.

Rückschlagarmaturen können eine innenliegende Auskleidung aus elastomerem Material wie beispielsweise CSM, IIR, NBR oder EPDM aufweisen. Diese Elastomere sind jedoch gegenüber hochkorrosiven Fluiden, Säuren und Basen, Ölen und Fetten nicht vollumfänglich beständig. Korrosionsbeständige Auskleidungen können aber oft nicht auf eine Rückschlagarmaturkonstruktion nach dem Stand der Technik aufgetragen werden.

Aufgabe der Erfindung ist es, eine Rückschlagarmatur mit einem Absperrkörper bereitzustellen, die beständig gegenüber hochkorrosiven Fluiden ist. Darüber hinaus soll die Rückschlagarmatur den Anforderungen des dauerhaften Betriebes gerecht werden und dabei äußerst langlebige Eigenschaften bewahren. Die Rückschlagarmatur soll sich auf möglichst preiswerte sowie besonders einfache Weise und mit einem möglichst geringen Materialausschuss herstellen lassen.

Diese Aufgabe wird erfindungsgemäß durch eine Rückschlagarmatur mit einem Absperrkörper gemäß den Merkmalen des Anspruchs 1 gelöst. Bevorzugte Varianten sind den Unteransprüchen, der Beschreibung und den Figuren zu entnehmen.

Gemäß der Erfindung ist zwischen dem Absperrkörper und dem Gehäuseteil ein verformbarer Bereich zum Schwenken zwischen einer geschlossenen und einer geöffneten Stellung ausgebildet, wobei der Bereich aus einem Thermoplasten ausgebildet ist.

Der Absperrkörper ist ein Bestandteil und ein Bauteil einer Rückschlagarmatur, der vorzugsweise als flächiger Volumenkörper dazu dient, einen Querschnitt eines Strömungskanals zu verschließen oder freizugeben. Dazu ist die Querschnittsfläche des Absperrkörpers größer als der Strömungskanal ausgebildet und wirkt mit einem Anschlag der Rückschlagarmatur zum dichtenden Verschließen des Strömungskanals zusammen.

Das Gehäuseteil kann vorzugsweise als Deckel der Rückschlagarmatur ausgeführt sein. Dabei besteht zwischen Gehäuseteil und Absperrkörper eine Verbindung, die eine Einheit bildet. Diese Einheit kann beispielsweise bei der Montage von oben in die Rückschlagarmatur eingesetzt und mit Fixierelementen befestigt werden, wodurch eine komplette und funktionsfähige Rückschlagarmatur erzielt wird.

Bei einer vorteilhaften Variante der Erfindung ist der Absperrkörper aus einem Thermoplasten ausgebildet.

Thermoplaste sind Kunststoffe, die sich in einem bestimmten Temperaturbereich verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich Thermoplaste von den Duroplasten und Elastomeren. Thermoplaste sind aus wenigen oder nicht verzweigten, also linearen Kohlenstoffketten aufgebaut, die nur durch schwache physikalische Bindungen miteinander verbunden sind. Thermoplaste werden bezüglich mechanischer, thermischer und chemischer Eigenschaften in die Gruppen Standardkunststoffe, technische Kunststoffe und Hochleistungskunststoffe eingeteilt.

Idealerweise ist der Thermoplast des Absperrkörpers als Fluorthermoplast, insbesondere als Polytetrafluorethylen oder als Perfluoralkoxylalkan, ausgeführt. Dadurch ist der Absperrkörper besonders beständig gegenüber der Einwirkung von hochkorrosiven Fluiden, Säuren und Basen, Ölen und Fetten.

Polytetrafluorethylen (PTFE) ist ein unverzweigtes, linear aufgebautes, teilkristallines Polymer aus Fluor und Kohlenstoff. PTFE gehört zur Klasse der Polyhalogenolefine und übergeordnet zu den Thermoplasten, obwohl es auch Eigenschaften aufweist, die eine eher für duroplastische Kunststoffe typische Verarbeitung bedingen.

Perfluoralkoxy-Polymere (PFA) sind vollständig fluorierte Kunststoffe, Copolymere aus Tetrafluorethylen (TFE) und Perfluoralkoxyvinylethern. PFA sind im Gegensatz zu PTFE thermoplastisch verarbeitbar. Im Vergleich zu PTFE haben PFA bessere Antihafteigenschaften, höhere Chemikalienbeständigkeit, jedoch geringere Kratzfestigkeit.

Bei einer günstigen Variante der Erfindung sind der Bereich zum Schwenken und der Absperrkörper einstückig ausgebildet. Dazu ist der Bereich zum Schwenken als Fortsatz an den Absperrkörper angeformt. Der Absperrkörper bildet mit dem bewegungsfunktionalen Bereich eine Einheit zur Realisierung der Aufgabe der Rückschlagarmatur. Dazu wirkt der Bereich zum Schwenken mit dem Gehäuseteil, vorzugsweise mit dem Gehäusedeckel der Armatur, zusammen, um den Absperrkörper schwenkbar zu gestalten und gleichzeitig an einen festen Ankerpunkt zu positionieren.

Bei einer vorteilhaften Variante der Erfindung sind das Gehäuseteil und der Bereich einstückig ausgebildet. Dazu ist der Bereich zum Schwenken, beispielsweise durch ein generatives Verfahren, mit dem Gehäusedeckel gleichzeitig und einteilig erzeugt worden. Die einteilige Ausbildung begünstigt eine besonders einfache Montage und realisiert die Reduktion der Teilanzahl der Rückschlagarmatur. Zudem besteht keine nachträglich erzeugte Verbindung zwischen dem Gehäusedeckel und dem Bereich zum Schwenken, die durch den Betriebseinfluss der Rückschlagarmatur schadhaft werden könnte.

Bei einer besonders vorteilhaften Variante der Erfindung sind das Gehäuseteil, der Bereich zum Schwenken und der Absperrkörper einstückig ausgebildet. Diese Einstückigkeit, insbesondere die unterschiedlichen Eigenschaften der verschiedenen Bauzonen, können besonders günstig durch ein generatives Verfahren realisiert werden. Die einstückige Ausführung begünstigt eine vereinfachte Montage und gegebenenfalls den Austausch im Revisionsfall.

Bei einer alternativen Variante der Erfindung weist der Bereich ein Aufhängungselement auf, welches zwischen dem Gehäuseteil und dem Gehäuse der Rückschlagarmatur fixiert ist. Dazu kann das Aufhängungselement beispielsweise zwischen dem Gehäuseteil und dem Gehäuse der Rückschlagarmatur geklemmt oder eingepresst werden. Diese Möglichkeit ist besonders geeignet, um den erfindungsgemäßen Absperrkörper in bereits verbaute, im Einsatz befindliche Rückschlagarmaturen zu integrieren.

Vorzugsweise kann das Aufhängungselement als Wulst oder als Keil zur Fixierung zwischen dem Gehäuseteil und dem Gehäuse der Rückschlagarmatur ausgebildet sein.

Idealerweise weist der Absperrkörper eine innere Struktur auf. Diese Struktur kann beispielsweise druckstabil und massereduziert ausgeführt sein. Vorzugsweise kann diese Struktur als Wabenstruktur mit inneren Stegen ausgebildet sein, die bei einer generativen Herstellung besonders schnell und materialsparend ausgeführt werden kann.

Vorteilhafterweise ist der Bereich zum Schwenken plattenartig ausgebildet. Dazu ist der Bereich zum Schwenken sehr dünn und flächig ausgeführt. Diese Ausführung bedingt in Kombination mit dem thermoplastischen Material die Beweglichkeit des Bereichs, insbesondere zum Schwenken des Absperrkörpers zwischen der Offen- und Geschlossenstellung. Gleichzeitig bietet die plattenartige Ausbildung ein hohes Maß an Stabilität, wodurch der Absperrkörper sicher am Gehäuseteil angebunden ist.

Bei einer günstigen Variante der Erfindung ist der Bereich um einen Faktor dünner als der Absperrkörper ausgebildet, wobei der Faktor mehr als 3, vorzugsweise mehr als 5, insbesondere mehr als 7, beträgt. Diese besonders dünne Ausführung des Bereichs ermöglicht die Schwenkbarkeit zwischen der Offen- und Geschlossenstellung des Absperrkörpers.

Idealerweise weist der Absperrkörper ein Pufferelement auf, wodurch das Anprallen am Gehäusedeckel beim Schwenken in die Offenstellung gedämpft wird. Das Pufferelement fängt Stöße und Schläge aufgrund großer Druckunterschiede beim Schwenken ab und begünstigt somit eine lange Nutzungsdauer der Rückschlagarmatur.

Vorzugsweise umfasst die Rückschlagarmatur einen Kanal, der mindestens einen Anschlag für den Absperrkörper aufweist. Der Kanal bildet den Strömungsraum für das Fluid, in dem der Absperrkörper angeordnet ist und die erwünschte Fluidströmungsrichtung realisiert. Um die Strömung in die unerwünschte Richtung vollständig absperren zu können, weist der Kanal einen Anschlag in Form von einem dichtenden Sitz für den Absperrkörper auf.

Bei einer besonders bevorzugten Variante der Erfindung wird der Absperrkörper aus PTFE gedruckt. Dabei ist der Absperrkörper in seiner Kontur so optimiert, dass er einen Bereich aufweist, der ein Schwenken des Absperrkörpers in eine Offenstellung und Geschlossenstellung ermöglicht. Der Bereich ist vorzugsweise in dem Teil des Absperrkörpers ausgebildet, der eine Verbindung zum Gehäuse bzw. zur Auskleidung des Gehäuses und/oder des Gehäusedeckels aufweist.

Idealerweise ist dieser Bereich einstückig mit dem Absperrkörper ausgebildet und im Vergleich zum Absperrkörper besonders dünn ausgeführt, so dass eine Biege- bzw. Schwenkbewegung realisiert werden kann. Vorzugsweise ist der Absperrkörper im inneren mit Hohlräumen ausgestattet, die auf einer stabilisierenden und tragfähigen Wabenstruktur basieren. Ein solcher Absperrkörper mit wabenförmiger Struktur ist besonders leicht, wodurch schlagartige und abrupte Schwenkbewegungen vermieden bzw. vermindert werden können.

Bei einer günstigen Variante der Erfindung sind der Gehäusedeckel inklusive der Dichtung zum Einsatz in das Gehäuse der Armatur sowie der Absperrkörper mit dem Bereich zum Schwenken einstückig ausgebildet. Diese Variante kann besonders vorteilhaft mit einem generativen Verfahren oder einem Spritzgussverfahren realisiert werden. Die einstückige Ausführung ist besonders günstig hinsichtlich der Montage. Darüber hinaus kann dieser einstückige Gehäuseeinsatz auch in bereits installierte Rückschlagarmaturen einfach und schnell verbaut werden.

Zusätzlich kann der Absperrkörper ein integriertes oder auf der Rückseite aufgebrachtes Metallelement umfassen. Besonders für Anwendungen, die einen Absperrkörper mit hoher Masse bedürfen, ist diese Ausführung vorteilhaft. Das Metallelement kann beispielsweise als Scheibe ausgeführt sein, die dann im 3D-Druck umbaut oder im Spritzgussverfahren umgossen wird.

Bei einer alternativen Variante der Erfindung ist das Gehäuseteil als Auskleidung eines Deckels der Rückschlagarmatur ausgebildet. Bei einer weiteren Variante der Erfindung kann der Absperrkörper einstückig mit einer Auskleidung des Gehäuseteils ausgeführt sein. Dazu kann die Auskleidung mit dem Gehäuseteildeckel verbunden werden, wodurch ein einteiliger Einsatz für die Rückschlagarmatur erzielt wird. Eine solche Auskleidung ist besonders dünn ausgeführt und ist sehr vorteilhaft, wenn das Armaturengehäuse ebenfalls mit einer solchen Auskleidung beschichtet wird. Bei dieser Variante bleibt eine äußere metallische Hülle gegeben, wodurch eventuell erforderliche elektrostatische Ableitungen erfolgen können. Gleichzeitig schützt die Auskleidung den Deckel vor einem Kontakt mit dem Medium.

Erfindungsgemäß werden in einem Verfahren zur Herstellung einer Rückschlagarmatur der Bereich und der Absperrkörper aus einem Thermoplasten gebildet.

Bei einer bevorzugten Variante der Erfindung wird der Kanal der Rückschlagarmatur mit einem Thermoplasten beschichtet. Dies kann mit allen bekannten Beschichtungsverfahren erfolgen und erzielt eine Armatur, die komplett beständig gegenüber der Einwirkung hochkorrosiver Medien ist.

Vorteilhafterweise kann die Auskleidung für den Gehäusedeckel der Armatur einstückig mit dem Absperrkörper ausgebildet werden. Eine solche Auskleidung kann mit dem Gehäusedeckel verbunden werden, so dass das Innenleben der Rückschlagarmatur, insbesondere die Auskleidung und der Absperrkörper, aus einem für hochkorrosive Medien beständigen Thermoplasten ausgeführt ist. Vorzugsweise werden die Auskleidung und der Absperrkörper aus PTFE ausgebildet.

Bei einer vorteilhaften Variante wird der Absperrkörper in einem generativen Verfahren gefertigt. Dabei kann der Absperrkörper aus einem einheitlichen oder aus unterschiedlichem Aufbaumaterial gebildet werden.

Das Aufbaumaterial umfasst schmelzfähigen Kunststoff, insbesondere Thermoplasten, bevorzugt PTFE und/oder einen Metall-Polymer-Hybridwerkstoff, beispielsweise für den Kern des Absperrkörpers.

Bei einer Variante der Erfindung wird der Absperrkörper mit dem Schmelzschicht-Werkzeug des additiven Fertigungsverfahrens erzeugt, bei dem aus schmelzfähigem Kunststoff ein Raster von Punkten auf eine Fläche aufgetragen wird. Durch Extrudieren mittels einer Düse sowie einer anschließenden Erhärtung durch Abkühlung an der gewünschten Position wird ein tragfähiger Aufbau erzeugt. Dabei kann das Innenleben des Absperrkörpers hohlraumbildend mit besonders tragfähiger Struktur erzeugt werden. Der Aufbau des Absperrkörpers erfolgt üblicherweise, indem wiederholt jeweils zeilenweise eine Arbeitsebene abgefahren und dann die Arbeitsebene stapelnd nach oben verschoben wird, sodass der Absperrkörper der Rückschlagarmatur schichtweise entsteht.

Bei einer alternativen Variante erfolgt die Fertigung der Rückschlagarmatur und des Absperrkörpers konventionell. Dabei kann der Absperrkörper vorzugsweise in einem Spritzgussverfahren erzeugt werden.

Gemäß der Erfindung wird eine Rückschlagarmatur mit einem thermoplastischen Absperrkörper für Fördereinrichtungen und Förderleitungen bei der Förderung hochkorrosiver Fluide verwendet.

Dabei ist der Absperrkörper vorteilhaft leicht ausgebildet im Vergleich zu bekannten Absperrkörpern in Rückschlagarmaturen, wodurch ein hartes Schlagen bzw. Zuschlagen des Absperrkörpers auf die Dichtfläche der Armatur vermieden bzw. reduziert werden kann. Zudem ist durch die massereduzierte Ausführung des Absperrkörpers eine deutlich verringerte Öffnungskraft zum Öffnen der Durchflussöffnung der Rückschlagarmatur erforderlich.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung einer Rückschlagarmatur,
- Fig. 2: eine perspektivische Darstellung eines Absperrkörpers,
- Fig. 3: eine schematische Darstellung einer Wabenstruktur im Inneren eines Absperrkörpers,
- Fig. 4: eine perspektivische Darstellung eines Gehäuseteils mit Absperrkörper,
- Fig. 5: eine weitere perspektivische Darstellung eines Gehäuseteils mit Absperrkörper.

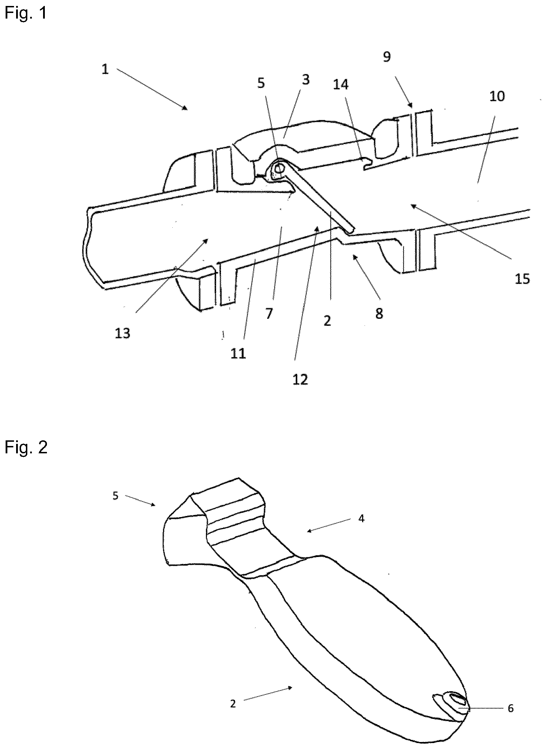

In Fig. 1 ist eine Schnittdarstellung einer Rückschlagarmatur 1 dargestellt. Die Rückschlagarmatur 1 ist in einer Flanschausführung über die Flansche 9 an eine Rohrleitung 10 angeschlossen. Das Gehäuseteil 3 ist in der dargestellten Ausführungsvariante als Deckel ausgebildet und mithilfe nicht dargestellter Fixierelemente mit dem Gehäuse 11 der Rückschlagarmatur 1 verbunden. Das Aufhängungselement 5 ist zwischen dem Gehäuse 11 und dem Gehäuseteil 3 eingeklemmt. Das Gehäuse 11 umschließt einen Kanal 7, in dem ein Fluid strömen kann. Der Kanal 7 weist eine Verjüngung 12 auf, deren Rand einen Anschlag 8 für den Absperrkörper 2 bildet.

Der Absperrkörper 2 ist einstückig mit dem Aufhängungselement 5 ausgebildet, das gleichzeitig eine Bewegung in eine Offenstellung ermöglicht. Fließt das Fluid durch die Einströmöffnung 13 der Rückschlagarmatur 1, ist eine geringe Öffnungskraft erforderlich, um den Absperrkörper 2 aus PTFE an den Anschlag 14 in Offenstellung zu positionieren. Strömt das Fluid durch die Ausströmöffnung 15 in die Rückschlagarmatur 1, wird der Absperrkörper 2 an den Anschlag 8 in Geschlossenstellung gedrückt und verhindert eine Fluidströmung entgegen der gewünschten Fluidrichtung.

Fig. 2 zeigt eine perspektivische Darstellung des Absperrkörpers 2. Der Absperrkörper 2 ist einstückig mit dem Bereich 4 zum Schwenken und dem Aufhängungselement 5 ausgeführt. Zusätzlich weist der Absperrkörper 2 ein Pufferelement 6 auf, um ein Anschlagen in die Offenstellung zu vermeiden.

Der Bereich 4 zum Schwenken ist plattenartig ausgebildet und um den Faktor 6,5 dünner als der Absperrkörper 2 ausgeführt, wodurch die Schwenkbewegung realisiert werden kann.

Der Absperrkörper 2, der Bereich 4 zum Schwenken und das Aufhängungselement 5 sind aus PTFE ausgeführt und somit beständig gegenüber hochkorrosiven Fluiden.

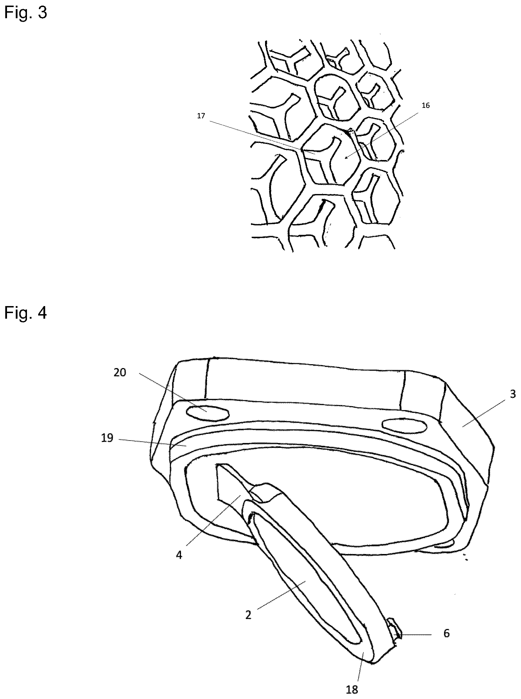

Fig. 3 zeigt eine schematische Darstellung einer Wabenstruktur 16 im Inneren eines Absperrkörpers 2. Dazu weist der Absperrkörper 2 unter der geschlossenen Außenoberfläche eine innere Struktur auf. In der dargestellten Ausführungsvariante weist die Wabenstruktur 16 sechseckige Waben auf, die nochmals von einer abgesetzten, inneren Stützstruktur 17 verstärkt ausgebildet sind. Dadurch weist der Absperrkörper 2 im Vergleich zu bekannten Absperrkörpern eine geringe Masse auf, wodurch eine geringere Öffnungskraft erforderlich ist und ein hartes Schlagen des Absperrkörpers an die Anschläge 8 und 14 vermieden werden kann.

Fig. 4 zeigt eine perspektivische Darstellung eines Gehäusedeckels 3 mit einem Absperrkörper 2. In der dargestellten Ausführungsvariante sind der Absperrkörper 2, der Bereich 4 zum Schwenken und das Gehäuseteil 3 einstückig und aus PTFE ausgebildet. Die Einstückigkeit kann vorteilhafterweise über die generative Fertigung realisiert werden.

Das Gehäuseteil 3, das hier als Deckel der Rückschlagarmatur 1 ausgeführt ist, weist zudem Bohrungen 20 zum Fixieren des Gehäuseteils 3 und einen Dichtring 19 auf, der einen dichtenden Einbau des Gehäuseteils 3 in die Rückschlagarmatur 1 ermöglicht.

Der Absperrkörper 2 weist eine dichtende Erhebung 18 zum Verhindern einer Fluidströmung entgegensetzt der erwünschten Fluidrichtung auf, die mit dem nicht dargestellten Anschlag 8 zusammenwirkt. Auf der gegenüberliegenden Seite des Absperrkörpers 2 ist das Pufferelement 6 angeordnet, das die Bewegung in die Offenstellung am Anschlag 14 abpuffert.

Der Bereich 4 zum Schwenken ist besonders dünn und plattenartig ausgebildet und geht auf der einen Seite nahtlos in das Gehäuseteil 3 und auf der anderen Seite in einem geschwungenen Übergang in den Absperrkörper 2 über. Der Bereich 4 ist um den Faktor 5 dünner ausgebildet als der Absperrkörper 2, wodurch das Schwenken zwischen Offen- und Geschlossenstellung aufgrund der reduzierten Materialstärke realisiert ist.

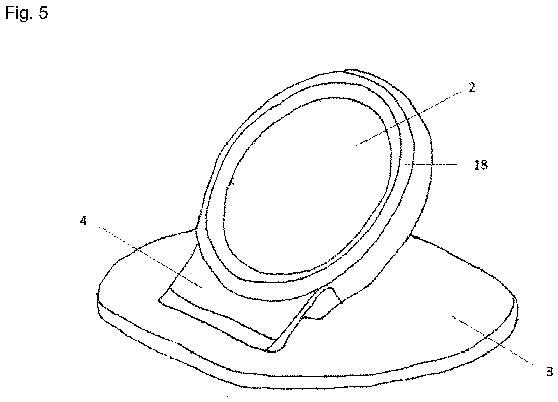

Fig. 5 zeigt eine perspektivische Darstellung des Gehäuseteils 3 mit dem Absperrkörper 2. In dieser Ausführungsvariante ist das Gehäuseteil 3 als Auskleidung des Gehäusedeckels ausgebildet. Die Auskleidung kann vorzugsweise an den Deckel verpresst und/oder verklebt werden. Die Auskleidung ist einstückig mit dem Bereich 4 zum Schwenken und dem Absperrkörper 2 ausgeführt. Diese Einstückigkeit kann beispielsweise durch ein generatives Verfahren realisiert werden, wobei auch ein Spritzgussverfahren prinzipiell denkbar ist. Die Auskleidung, der Bereich 4 und der Absperrkörper 2 sind aus PTFE ausgebildet, wobei der Absperrkörper 2 in seinem Inneren einen nicht dargestellten, metallischen Ring umfasst.

Der Absperrkörper 2 weist eine dichtende Erhebung 18 zum Verhindern einer Fluidströmung entgegensetzt der erwünschten Fluidrichtung auf, die mit dem nicht dargestellten Anschlag 8 zusammenwirkt. Der Bereich 4 zum Schwenken ist besonders dünn und plattenartig ausgebildet und geht auf der einen Seite nahtlos in das Gehäuseteil 3 und auf der anderen Seite in einem geschwungenen Übergang in den Absperrkörper 2 über. Der Bereich 4 ist um den Faktor 4,5 dünner ausgebildet als der Absperrkörper 2, wodurch ein Schwenken zwischen Offen- und Geschlossenstellung aufgrund der reduzierten Materialstärke erzielt werden kann.

## Patentansprüche

1. Rückschlagarmatur (1) mit einem Absperrkörper (2), der mit einem Gehäuseteil (3) in Verbindung steht,
**dadurch gekennzeichnet, dass**
zwischen dem Absperrkörper (2) und dem Gehäuseteil (3) ein verformbarer Bereich (4) zum Schwenken zwischen einer geschlossenen und einer geöffneten Stellung ausgebildet ist, wobei der Bereich (4) aus einem Thermoplasten ausgebildet ist.

2. Rückschlagarmatur nach Anspruch 1, **dadurch gekennzeichnet, dass** der Absperrkörper (2) aus einem Thermoplasten ausgebildet ist.

3. Rückschlagarmatur nach Anspruch 1 oder 2, **dadurch gekennzeichnet, dass** der Thermoplast als Fluorthermoplast, insbesondere als Polytetrafluorethylen oder als Perfluoralkoxylalkan, ausgeführt ist.

4. Rückschlagarmatur nach einem der Ansprüche 1 bis 3, **dadurch gekennzeichnet, dass** der Bereich (4) zum Schwenken und der Absperrkörper (2) einstückig ausgebildet sind.

5. Rückschlagarmatur nach einem der Ansprüche 1 bis 4, **dadurch gekennzeichnet, dass** das Gehäuseteil (3) als Deckel der Rückschlagarmatur (1) ausgebildet ist.

6. Rückschlagarmatur nach einem der Ansprüche 1 bis 4, **dadurch gekennzeichnet, dass** das Gehäuseteil (3) als Auskleidung eines Deckels der Rückschlagarmatur (1) ausgebildet ist.

7. Rückschlagarmatur nach einem der Ansprüche 1 bis 6, **dadurch gekennzeichnet, dass** das Gehäuseteil (3) und der Bereich (4) einstückig ausgebildet ist.

8. Rückschlagarmatur nach einem der Ansprüche 1 bis 6, **dadurch gekennzeichnet, dass** der Bereich (4) ein Aufhängungselement (5) aufweist, welches zwischen dem Gehäuseteil (3) und der Rückschlagarmatur (1) fixiert ist.

9. Rückschlagarmatur nach einem der Ansprüche 1 bis 8, **dadurch gekennzeichnet, dass** der Absperrkörper (2) eine innere Struktur aufweist.

10. Rückschlagarmatur nach einem der Ansprüche 1 bis 9, **dadurch gekennzeichnet, dass** der Bereich (4) plattenartig ausgebildet ist.

11. Rückschlagarmatur nach einem der Ansprüche 1 bis 10, **dadurch gekennzeichnet, dass** der Bereich (4) um einen Faktor dünner als der Absperrkörper (2) ausgebildet ist, wobei der Faktor mehr als 3, vorzugsweise mehr als 5, insbesondere mehr als 7, beträgt.

12. Rückschlagarmatur nach einem der Ansprüche 1 bis 11, **dadurch gekennzeichnet, dass** der Absperrkörper (2) ein Pufferelement (6) aufweist.

13. Rückschlagarmatur nach einem der Ansprüche 1 bis 12, **dadurch gekennzeichnet, dass** die Rückschlagarmatur (1) einen Kanal (7) umfasst, der mindestens einen Anschlag (8) für den Absperrkörper (2) aufweist.

14. Verfahren zur Herstellung einer Rückschlagarmatur (1) nach einem der Ansprüche 1 bis 13, **dadurch gekennzeichnet, dass** der Bereich (4) und der Absperrkörper (2) aus einem Thermoplasten gebildet werden.

15. Verfahren nach Anspruch 14, **dadurch gekennzeichnet, dass** der Kanal (7) der Rückschlagarmatur (1) mit einem Thermoplasten beschichtet wird.

16. Verwendung einer Rückschlagarmatur (1) nach einem der Ansprüche 1 bis 13 mit einem thermoplastischen Absperrkörper (2) für Fördereinrichtungen und Förderleitungen zur Förderung von hochkorrosiven Fluiden.
